# EUROPÄISCHE PATENTSCHRIFT

(11) **EP 2 081 731 B1**
(45) Veröffentlichungstag und Bekanntmachung des Hinweises auf die Patenterteilung: **10.05.2017**
(21) Anmeldenummer: 07817644.3
(22) Anmeldetag: 10.10.2007
(51) Int. Cl.: B22F 7/06, B22F 3/105, B23P 6/00, F01D 5/00

(54) **VERFAHREN ZUR REPARATUR VON HOCHDRUCKTURBINEN-SCHAUFELN**
METHOD OF REPAIRING HIGH-PRESSURE TURBINE BLADES
PROCÉDÉ DE RÉPARATION DE PALES DE TURBINES À HAUTE PRESSION

(30) Priorität: 18.10.2006 DE 102006049219
(43) Veröffentlichungstag der Anmeldung: 29.07.2009
(73) Patentinhaber: MTU Aero Engines AG, 80995 München (DE)
(72) Erfinder: RICHTER, Karl-Hermann, 85229 Markt Indersdorf (DE)
(86) Internationale Anmeldenummer: PCT/DE2007/001802
(87) Internationale Veröffentlichungsnummer: WO 2008/046387

(56) Entgegenhaltungen:
- EP-A2- 1 153 699
- WO-A-2004/096487
- WO-A2-2006/024844
- DE-A1-102004 051 231
- DE-A1-102005 002 609
- US-A- 5 972 424
- US-A1- 2001 014 403
- US-A1- 2003 105 538
- US-A1- 2005 091 848

## Beschreibung

Die Erfindung betrifft ein Verfahren zur Reparatur einer Hochdruckturbinen-Schaufel (HDT-Schaufel).

HDT-Schaufeln verfügen in ihrem Inneren über ein verhältnismäßig kompliziertes Kanalsystem für eine Luftkühlung. Zum Fertigen derartiger mit einem solchen Kanalsystem versehenen HDT-Schaufeln werden diese beispielsweise gegossen, wobei beim Gießen ein aufwendiges Kernsystem zur Ausbildung des Kanalsystems eingebracht wird.

Nicht zuletzt aufgrund dieses aufwendigen Herstellungsprozesses sind derartige Hochdruckturbinenschaufeln sehr teuer, so dass eine einzige Schaufel Kosten in Höhe eines fünfstelligen Eurobetrages bewirken kann.

Vor diesem Hintergrund ist es wünschenswert, beschädigte Hochdruckturbinen-schaufeln zu reparieren und zwar kostengünstiger als es einer Neuteilfertigung entspräche.

Ein beispielhaftes Verfahren zur Reparatur einer Turbinenschaufel ist in der US 2005/0091848 A1, der US 2001/014403 A1 sowie der WO 2004/096487 A1 offenbart. Auch die DE 10 2005 002 609.5 der Anmelderin offenbart ein Verfahren zur Reparatur von Turbinenschaufeln. Die Dokumente US5,972,424 und WO 2006/024844 A2 offenbaren ebenfalls Reparaturverfahren, wobei ein abgetragener Bauteiabschnitt generativ wieder aufgebaut wird. Die WO2006/024844 A2 bildet den nächstliegenden Stand der Technik und offenbart ein Verfahren zur Reparatur von Hochdruckturbinen-Schaufeln, insbesondere zur Reparatur von Hochdruckturbinen-Schaufeln eines Flugtriebwerks, mit den Schritten: Abtrennen eines mit einer Beschädigung versehenen Abschnitts der Hochdruckturbinen-Schaufel; und Erzeugen eines Ersatzabschnitts für den abgetrennten Abschnitt an bzw. auf der Hochdruckturbinen-Schaufel mittels Laserstahlgenerieren aus dem Pulverbett.

Die Probleme, die sich bei der Reparatur von Hochdruckturbinen-Schaufeln stellen sind deutlich größer als bei Verdichterschaufeln. Dies ist nicht zuletzt auf das angesprochene aufwendige Kanalsystem innerhalb der Hochdruckturbinen-Schaufeln zurückzuführen, welches Kanalsystem bei Verdichterschaufeln fehlt. Schäden an Hochdruckturbinen-Schaufeln, die unterhalb des Tip-Bereichs auftreten, lassen sich bislang - soweit der Anmelderin bekannt - allenfalls mit äußerst mäßigem Erfolg reparieren, wobei insbesondere Einschränkungen bezüglich der gesamten Risslänge und der Risslage existieren. Beim Fügen eines Ersatzteils, was beispielsweise durch Diffusionsverbinden bzw. Diffusionslöten oder durch Strahlschweißen (LB-Schweißen oder EB-Schweißen) erfolgen kann, besteht das Problem, ein (gießtechnisch hergestelltes) Ersatzteil auf die Ist-Kontur des restlichen Schaufelblatts zu fügen. Diese kann jedoch erheblich von der Soll-Kontur abweichen.

Vor diesem Hintergrund liegt der Erfindung nun die Aufgabe zugrunde, ein Reparaturverfahren für Hochdruckturbinen-Schaufeln mit gesteigerter Effizienz zu schaffen, das betriebssicher ist und eine gute Wiederherstellung bzw. Wiedererzeugung bzw. Aufrechterhaltung eines inneren Kanalsystems ermöglicht.

Erfindungsgemäß wird ein Verfahren zur Reparatur von Hochdruckturbinen-Schaufeln gemäß Anspruch 1 vorgeschlagen. Bevorzugte Gestaltungen sind Gegenstand der Unteransprüche.

Gemäß der Erfindung wird nun ein Verfahren zur Reparatur von Hochdruckturbinen-Schaufeln, und zwar insbesondere zur Reparatur von Hochdruckturbinen-Schaufeln eines Flugtriebwerks, vorgeschlagen, bei dem zunächst ein mit einer Beschädigung versehener Abschnitt der Hochdruckturbinenschaufel abgetrennt wird und anschließend ein Ersatzabschnitt für den abgetrennten Abschnitt an bzw. auf der Hochdruckturbinen-Schaufel mittels Laserstrahlgenerieren aus dem Pulverbett erzeugt wird. Im Folgenden sollen nun Ausführungsbeispiele der Erfindung anhand der Figuren näher erläutert werden, ohne dass die Erfindung hierdurch durch die Ausführungsbeispiele eingeschränkt sein soll. Dabei zeigt:
- Fig. 1: einen schematischen Ablauf eines beispielhaften erfindungsgemäßen Verfahrens;
- Fig. 2: eine schematische Darstellung einer beschädigten HDT-Schaufel, die im Rahmen eines beispielhaften erfindungsgemäßen Verfahrens verwendet werden kann;
- Fig. 3: eine schematische Darstellung eines Ausschnitts (mit Schnittebene) einer abgetrennten HDT-Schaufel aus Fig. 2; und
- Fig. 4: eine schematische Darstellung der Reparatur von HDT-Schaufeln durch SLM.

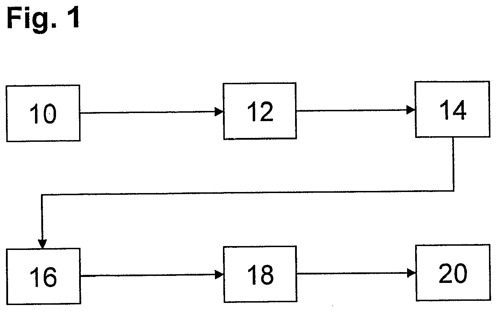

Fig. 1 zeigt die Schritte eines beispielhaften erfindungsgemäßen Verfahrens in schematischer Darstellung.

Bei diesem Verfahren handelt es sich um ein Verfahren zur Reparatur von Hochdruckturbinen-Schaufeln von Gasturbinen durch - insbesondere direktes - Laserstrahlgenerieren aus dem Pulverbett.

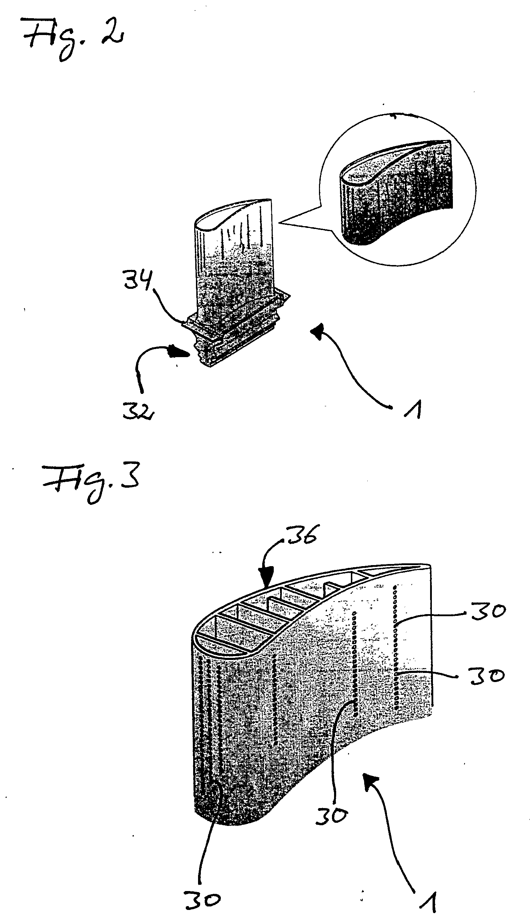

Im Schritt 10 wird ein beschädigter Bereich der HDT-Schaufel abgetrennt. Dieses erfolgt hier durch eine standardisierte, ebene Schnittebene. Anzumerken ist, dass die Schnittebene beispielsweise gerade - wie es in den Fig. 2 und 3 gezeigt ist - oder schräg - was in den fig. nicht gezeigt ist - verlaufen kann. Wie bereits oben angesprochen, ist eine beispielhafte beschädigte HDT-Schaufel in schematischer Darstellung in Fig. 2 gezeigt. Bei dieser beschädigten HDT-Schaufel gemäß Fig. 2 sind Risse im Schaufelblatt gegeben. Die Risse treten typischerweise bzw. beispielsweise unterhalt der Schaufelspitze auf. Dort ist auch schematisch eine Vielzahl von Kühlöffnungen 30 angedeutet, die in die Oberfläche der HDT-Schaufel eingebracht sind und sich in dessen Inneres erstrecken. Die HDT-Schaufel weist einen Schaufelfuß 32 sowie eine Plattform 34 auf. Ferner weist die HDT-Schaufel 1 ein Schaufelblatt auf, in das die angesprochenen Kühlöffnungen 30 eingebracht sind. Die bzw. eine Beschädigung ist in der Gestaltung gemäß Fig. 2 nicht gesondert hervorgehoben.

In der Darstellung gemäß Fig. 3 ist ein Ausschnitt der HDT-Schaufel gemäß Fig. 2 gezeigt, wobei ein beschädigter Abschnitt bereits abgetrennt ist bzw. wobei in Fig. 3 in einem Ausschnitt das restliche Schaufelblatt nach dem Abtrennen eines standardisierten Bereiches gezeigt ist. Damit ist eine Kanalstruktur bzw. ein Kanalsystem 36 erkennbar, das im Inneren der HDT-Schaufel 1 vorgesehen ist, und in welches die Kühlöffnungen münden.

Die angesprochenen standardisierten Schnittebenen können bereits vorbestimmt sein, und zwar für eine Vielzahl von individuellen HDT-Schaufeln. Eine geeignete Lage dieser standardisierten Schnittebene kann empirisch ermittelt sein und / oder mittels theoretischer Berechnungen bzw. theoretisch durch Berechnung der auftretenden Spannungen ermittelt sein. Die standardisierte Schnittebene kann beispielsweise anhand von Erfahrungswerten und / oder von statistischen Erfassungen oder dergleichen ermittelt sein und für verschiedene HDT-Schaufeln verwendet werden, und unabhängig vom konkreten Schadensbild. In zweckmäßiger Ausgestaltung wird die Schnittebene derart ermittelt bzw. festgelegt, dass sie im Bereich geringer Spannungen liegt bzw. in einem Bereich, in dem im Betrieb der Schaufel in einem Flugtriebwerk geringe Spannungen auftreten, wobei vorzugsweise bei der Ermittlung der Spannungen Eigenspannungen und / oder dynamische Spannungen und / oder Restspannungen berücksichtigt werden.

Im Schritt 12 wird die Ist-Kontur der zu reparierenden Schaufel 1 in der Schnittebene ermittelt bzw. gemessen. Wie angesprochen ist die Schnittebene in Fig. 3 oben gezeigt.

Im Schritt 14 wird die abgetrennte HDT-Schaufel, also der Schaufelrest der stehen bleibt, wenn der beschädigte Abschnitt der HDT-Schaufel entfernt wurde, in einer Anlage bzw. Maschine zum - insbesondere direkten - Laserstrahlgenerieren aus dem Pulverbett eingebaut. In vorteilhafter Ausgestaltung wird dabei eine Maschine bzw. Anlage eingesetzt, in der gleichzeitig eine Vielzahl von Schaufel bearbeitet werden können, wie beispielsweise ca. 50 Schaufeln).

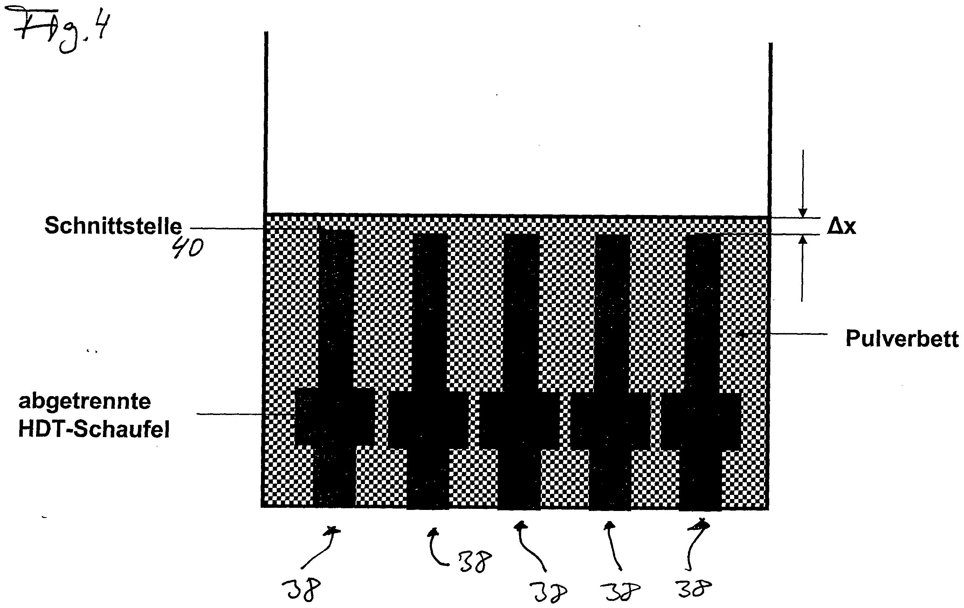

Im Schritt 16 wird ein Ersatzteil bzw. ein Ersatzabschnitt auf der abgetrennten HDT-Schaufel durch Laserstrahlgenerieren aus dem Pulverbett aufgebaut. Es wird hier also ein Ersatzabschnitt für den abgetrennten Abschnitt an bzw. auf der Hochdruckturbinen-Schaufel mittels Laserstrahlgenerieren aus dem Pulverbett erzeugt. Das Laserstrahlgenerieren aus dem Pulverbett kann auch als "direktes Laserformen" oder als "Selective Laser Melting" (SLM) bezeichnet werden. Das Laserstrahlgenerieren aus dem Pulverbett kann zum Rapid Manufacturing verwendet werden. Für das Laserstrahlgenerieren aus dem Pulverbett werden die Bauteile bzw. der Ersatzabschnitt an der HDT-Schaufel schichtweise durch "Belichtung" mit einem Laser auf einer - vorzugsweise ebenen - Plattform aufgebaut. Danach werden sie bzw. es von der Plattform getrennt und es kann - wie im Folgenden noch angesprochen werden wird - ein "Finishing" des generierten Ersatzteils bzw. Ersatzabschnitts durchgeführt werden. Ein Vorteil dieses Verfahrens liegt darin, dass auch die inneren Bauteilkonturen hergestellt werden können und dass der Prozess vollautomatisiert ablaufen kann. Zunächst wird die abgetrennte HDT-Schaufel im Bearbeitungsraum positioniert und anschließend die Schnittebene messtechnisch (durch Bildverarbeitung) erfasst. Darauf abgestimmt wird der Verfahrweg des Laserstrahls zur Belichtung der zu generierenden Schichten des Ersatzteils durch Interpolation angepasst. In Fig. 4 ist eine Reihe von fünf abgetrennten HDT-Schaufeln nach Auffüllung des Pulverbetts und vor der ersten Belichtung gezeigt, bzw. eine schematische Darstellung der Reparatur von HPT-Schaufelblättern durch SLM. In den Bereichen 38 sind dabei abgetrennte HDT-Schaufeln gezeigt. Der Bereich 40 zeigt eine Schnittstelle. Die Angabe "Δx" deutet die einer Schicht entsprechenden "Pulverhöhe" an. 'Es ist insbesondere vorgesehen, dass mit geringerer "Pulverhöhe" die Korngröße kleiner und damit die Genauigkeit größer werden kann.

Zur Erhöhung der Effizienz können bis zu 100 oder mehr zu reparierende HDT-Schaufeln im Bearbeitungsraum der Anlage positioniert werden. Schließlich wird das Pulverbett derart aufgefüllt, dass die Schnittebenen der zu reparierenden HDT-Schaufeln um den Wert Δx unterhalb der Oberfläche des Pulverbetts liegen (vergleiche Fig. 4). Dem Wert Δx entspricht die Dicke einer belichteten Schicht. Je kleiner Δx ist, desto höher ist die Genauigkeit des generierten Ersatzteils bzw. Ersatzabschnitts. Limitierend für den Wert Δx ist vor allem die Kornverteilung des Pulvers. Weiterhin verhalten sich Δx und die Bearbeitungszeit zueinander umgekehrt proportional. Bereits heute lässt sich eine Schichtdicke von beispielsweise 30 µm realisieren. Es kann aber auch vorgesehen sein, dass die Schichtdicke Δx kleiner als 200 µm, bevorzugt kleiner als 100 µm, bevorzugt 50 µm oder kleiner gleich 50 µm, bevorzugt kleiner gleich 40 µm, bevorzugt kleiner gleich 30 µm ist, bevorzugt kleiner gleich 20 µm ist, bevorzugt kleiner gleich 10 µm ist.

Der Aufbau des Ersatzteils bzw. des Ersatzabschnitts umfasst im Ausführungsbeispiel auch die Herstellung von Kühlluftbohrungen, die ansonsten konventionell durch Laserbohren, EDM oder EC-Bohren hergestellt werden müssen.

Nach dem SLM-Prozeß bzw. dem Schritt 16 erfolgt ein Finishing der Außenkonturen bzw. der Außenkontur des generierten Ersatzteils bzw. Ersatzabschnitts im Schnitt 18.

Anschließend können im Schritt 20 weitere - gegebenenfalls notwendige - Arbeitsschritte erfolgen, wie z. B. Alitieren oder Laserbohren oder dergleichen.

Wie insbesondere die anhand der Fig. erläuterten Ausführungsbeispiele zeigen, legt die Erfindung die Basis für eine Vielzahl von Vorteilen, von denen einige, die alternativ oder in beliebiger Kombination kommulativ gegeben sein können, im Folgenden erwähnt werden sollten: so lässt sich das Ersatzteil automatisiert anpassen bzw. herstellen, ferner wird ein Reparaturverfahren für hochwertige bzw. kostenintensive Bauteile geschaffen. Überdies wird die Reparierbarkeit von beschädigten Blades bzw. Schaufelblättern signifikant erhöht; Weiter wird erstmalig ein Airfoil Replacement von HDT-Blades bzw. -Schaufeln bzw. -Schaufelblättern bereitgestellt, da ein solches bislang auf dem Weltmarkt und im Stand der Technik noch nicht angeboten wird, und auch im Übrigen noch nicht offenbart ist.

## Patentansprüche

1. Verfahren zur Reparatur von Hochdruckturbinen-Schaufeln, insbesondere zur Reparatur von Hochdruckturbinen-Schaufeln eines Flugtriebwerks, wobei mehrere zu reparierende Hochdruckturbinen-Schaufeln in den Bearbeitungsraum einer Anlage positioniert werden, so dass gleichzeitig eine Vielzahl von Schaufeln bearbeitet werden kann, mit den Schritten:
- Abtrennen eines mit einer Beschädigung versehenen Abschnitts der Hochdruckturbinen-Schaufel (1), wobei die abgetrennte Hochdruckturbinen-Schaufel (1) in einer Anlage zum Laserstrahlgenerieren aus dem Pulverbett eingebaut wird; und
- Erzeugen eines Ersatzabschnitts für den abgetrennten Abschnitt an bzw. auf der Hochdruckturbinen-Schaufel (1) mittels Laserstrahlgenerieren aus dem Pulverbett, wobei für das Abtrennen des mit einer Beschädigung versehenen Abschnitts der Hochdruckturbinen-Schaufel wenigstens eine unabhängig vom konkreten Schadensbild standardisierte Schnittebene festgelegt ist, und das Abtrennen entsprechend dieser standardisieren Schnittebene erfolgt, und wobei ein Schaufelrest beim Aufbauen des Ersatzabschnitts im Pulverbett aufgenommen wird.

2. Verfahren nach Anspruch 1, **dadurch gekennzeichnet, dass** vor dem Erzeugen des Ersatzabschnitts und / oder nach dem Abtrennen des mit der Beschädigung versehenen Abschnitts der Hochdruckturbinen-Schaufel die Ist-Kontur des zu reparierenden Bauteils gemessen wird, und zwar insbesondere in der Schnittebene.

3. Verfahren nach Anspruch 1 oder 2, **dadurch gekennzeichnet, dass** die Hochdruckturbinen-Schaufel vor dem Erzeugen eines Ersatzabschnitts - und zwar insbesondere nach dem Abtrennen des mit der Beschädigung versehenen Abschnitts - in eine Anlage zum direkten Laserstrahlgenerieren aus dem Pulverbett eingebaut wird.

4. Verfahren nach Anspruch 1, 2 oder 3, **dadurch gekennzeichnet, dass** nach dem Erzeugen des Ersatzabschnitts mittels Laserstrahlgenerieren aus dem Pulverbett ein Finishing der Außenkontur dieses Ersatzabschnitts erfolgt.

5. Verfahren nach Anspruch 1, 2 oder 3, **dadurch gekennzeichnet, dass** nach dem Erzeugen des Ersatzabschnitts mittels Laserstrahlgenerieren aus dem Pulverbett und / oder nach dem Finishing der Außenkontur dieses Ersatzabschnitts ein Alitieren und / oder ein Laserbohren der Hochdruckturbinen-Schaufel erfolgt, und zwar insbesondere im Bereich des Ersatzabschnitts.

## Claims

1. A method for repairing high-pressure turbine blades, in particular for repairing high-pressure turbine blades of an aircraft engine, wherein several high-pressure turbine blades to be repaired are positioned such in the machining area of an installation that a plurality of blades can be machine worked simultaneously, comprising the steps of:
- detaching a section of the high-pressure turbine blade (1), exhibiting damage, wherein the detached high-pressure turbine blade (1) is incorporated into an installation for generating laser beams from the powder bed; and
- generating a replacement section for the detached section at or on the high-pressure turbine blade (1) by means of generating laser beams from the powder bed, wherein at least one standardized sectional plane is determined, independent of the damage in question, for detaching the section of the high-pressure turbine blade exhibiting damage and wherein detaching is performed according to this standardized sectional plane and wherein a remainder of the blade is received in the powder bed for constructing the replacement section.

2. A method according to claim 1, **characterized in that** the actual contour of the component to be repaired will be measured, that is in particular on the sectional plane, before generating the replacement section and/or subsequently to detaching the section of the high-pressure turbine blade exhibiting the damage.

3. A method according to claims 1 or 2, **characterized in that** the high-pressure turbine blade is incorporated into an installation for directly generating laser beams from the powder bed before generating a replacement section, that is in particular subsequently to detaching the section exhibiting the damage.

4. A method according to claims 1, 2 or 3, **characterized in that** subsequently to generating the replacement section by means of generating laser beams from the powder bed, the outer contour of this replacement section is undergoing a finishing.

5. A method according to claims 1, 2 or 3, **characterized in that** subsequently to generating the replacement section by means of generating laser beams from the powder bed and/or subsequently to finishing the outer contour of this replacement section, the high-pressure turbine blade is undergoing alitizationand/or laser drilling, that is in particular in the area of the replacement section.

## Revendications

1. Procédé de réparation de pales de turbine à haute pression, en particulier pour la réparation de pales de turbine à haute pression d'un groupe motopropulseur, dans lequel plusieurs pales de turbine à haute pression à réparer sont positionnées dans l'espace de traitement d'une installation de sorte qu'une pluralité de pales puisse être traitée simultanément, avec les étapes :
- séparation d'une section pourvue d'un endommagement des pales de turbine à haute pression (1), dans lequel la pale de turbine à haute pression (1) séparée est intégrée dans une installation pour la génération de faisceau laser à partir du lit de poudre ; et
- génération d'une section de remplacement pour la section séparée au niveau des ou sur les pales de turbine à haute pression (1) par la génération de faisceau laser à partir du lit de poudre, dans lequel pour la séparation de la section pourvue d'un endommagement des pales de turbine à haute pression, au moins un plan de coupe standardisé indépendamment du dégât concret est fixé, et la séparation est effectuée selon ce plan de coupe standardisé, et dans lequel un reste de pale est reçu lors de la mise en place de la section de remplacement dans le lit de poudre.

2. Procédé selon la revendication 1, **caractérisé en ce qu'**avant la génération de la section de remplacement et/ou après la séparation de la section pourvue de l'endommagement des pales de turbine à haute pression, le contour réel du composant à réparer est mesuré, et ce en particulier dans le plan de coupe.

3. Procédé selon la revendication 1 ou 2, **caractérisé en ce que** la pale de turbine à haute pression est intégrée avant la génération d'une section de remplacement, et ce en particulier après la séparation de la section pourvue de l'endommagement, dans une installation pour la génération directe de faisceau laser à partir du lit de poudre.

4. Procédé selon la revendication 1, 2 ou 3, **caractérisé en ce qu'**après la génération de la section de remplacement à l'aide de la génération de faisceau laser à partir du lit de poudre, une finition du contour extérieur de cette section de remplacement est effectuée.

5. Procédé selon la revendication 1, 2 ou 3, **caractérisé en ce qu'**après la génération de la section de remplacement à l'aide de la génération de faisceau laser à partir du lit de poudre et/ou après la finition du contour extérieur de cette section de remplacement, une calorisation et/ou un forage par laser des pales de turbine à haute pression est effectué, et ce en particulier dans la zone de la section de remplacement.
